Europäisches Patentamt

European Patent Office

Office européen des brevets

(19)

(11) Veröffentlichungsnummer: **0 107 175**
**B1**

# (12) EUROPÄISCHE PATENTSCHRIFT

(45) Veröffentlichungstag der Patentschrift:
28.01.87

(51) Int. Cl.⁴: **H 04 J 3/12, H 04 L 25/49**

(21) Anmeldenummer: 83110428.6

(22) Anmeldetag: 19.10.83

(54) Verfahren zur digitalen Nachrichtenübertragung.

(30) Priorität: 21.10.82 DE 3238973

(43) Veröffentlichungstag der Anmeldung:
02.05.84 Patentblatt 84/18

(45) Bekanntmachung des Hinweises auf die Patenterteilung:
28.01.87 Patentblatt 87/5

(84) Benannte Vertragsstaaten:
AT CH DE LI NL

(56) Entgegenhaltungen:
GB - A - 1 401 261

NACHRICHTENTECHNISCHE ZEITSCHRIFT, Band 27,
Nr. 12, 1974, Seiten 475-479, Berlin, DE., H. MÜLLER:
"Bit sequence independence through scramblers in
digital communication systems"

(73) Patentinhaber: Siemens Aktiengesellschaft Berlin und
München, Wittelsbacherplatz 2, D-8000 München 2 (DE)

(72) Erfinder: Kahn, Klaus-Dieter, Dipl.-Ing.,
Frühlingstrasse 26, D-8034 Germering (DE)
Erfinder: Kühne, Friedrich, Dr.-Ing.,
Gabriele-Münter-Strasse 21, D-8000 München 71 (DE)
Erfinder: Barth, Hermann, Dipl.-Ing.,
Forstenrieder-Allee 236, D-8000 München 71 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur digitalen Nachrichtenübertragung in einem Digital-Richtfunksystem mit einem Überrahmen für die Digitalsignale zum Übertragen zusätzlicher Informationen, wobei der Überrahmen zwei Blöcke enthält mit jeweils einer bestimmten Anzahl von Zusatzbits und Informationsbits und in ihm eine Verwürfelung der Digitalsignale durch Addition eines periodischen Bitmusters zum Digitalsignal erfolgt.

In Digital-Richtfunksystemen mit zwei Endstellen und einer oder mehreren Zwischenstellen werden an der sendenden Endstelle Zusatzbits in das zu übertragende Digitalsignal eingefügt, die an der empfangenden Endstelle wieder entfernt werden. Diese Zusatzbits sind Rahmenkennungsbits, Paritätsbits und Dienstbits. Die Anordnung der Zusatzbits wird durch einen Überrahmen definiert. Die Zusatzbits können dabei verteilt oder in Blöcken angeordnet sein. Die Rahmenkennungsbits ermöglichen den Empfängern in den Zwischenstellen und der Endstelle, sich auf den Überrahmen aufzusynchronisieren und die Paritätsbits und Dienstbits auszuwerten. Die Paritätsbits überwachen die Übertragungsqualität. Die Dienstbits übertragen Alarmmeldungen, die RF-Kanalkennung sowie digitale Dienstsignale für Dienstgespräche, Fernüberwachung und Schaltbefehle.

Mit dem Überrahmen ist eine Verwürfelung der Digitalsignale verbunden. Im Sender wird ein periodisches Bitmuster synchron zum Überrahmen erzeugt und zu dem Digitalsignal addiert. Dadurch entsteht ein verwürfeltes Digitalsignal. Im Empfänger wird dieselbe Scramblerfolge erzeugt und zu dem verwürfelten Digitalsignal addiert, wodurch das ursprüngliche Digitalsignal wieder zurückgewonnen wird. In beiden Fällen wird die Addition als Modulo-2-Addition durchgeführt. Der Generator für die Scramblerfolge ist im allgemeinen ein rückgekoppeltes Schieberegister, das periodisch, z.B. jeweils am Anfang des Überrahmens zurückgesetzt wird.

Ein Verfahren zur Einfügung von Zusatzbits ist in der Zeitschrift TELCOM-Report 5 (1982) 2, S. 138-144 beschrieben. Nach diesem Verfahren enthält der Überrahmen zwei Blöcke mit jeweils k Zusatzbits, zwischen denen I Informationsbits angeordnet sind. Dabei besteht jedoch die Möglichkeit, dass durch Dienstbits im zweiten Block eine Rahmenkennung vorgetäuscht wird oder bei Übertragung periodischer Muster, deren Perioden Teiler von 2 I sind, die Rahmenkennung an irgendeiner Stelle des Überrahmens vorgetäuscht wird. Die Vermeidung dieser Vortäuschungen schränkt die Wahl der Parameter des Überrahmens und der Verwürfelung ein.

Der Erfindung liegt die Aufgabe zugrunde, ein Verfahren für die Anordnung der Zusatzbits anzugeben, das volle Freizügigkeit in der Wahl der Parameter und bei der Benutzung der Dienstbits sicherstellt.

Diese Aufgabe wird gemäss der Erfindung in der Weise gelöst, dass der Block des ersten Halbrahmens Paritätsbits, Dienstbits und Rahmenkennungsbits und der Block des zweiten Halbrahmens Paritätsbits, Dienstbits sowie ein Markierungsbit und ein Rahmenkennungsbit enthalten, und dass m Überrahmen zu einem Mehrfachrahmen zusammengefasst sind und das zum Verwürfeln verwendete Muster eine Periode von der Länge des Mehrfachrahmens hat.

Vortäuschungen der Rahmenkennung kommen hierbei mit der Periode des Mehrfachrahmens vor, während die echte Rahmenkennung die Periode des Überrahmens hat. Die Verwendung eines Rahmenkennungsbits im Block des zweiten Halbrahmens, also im zweiten Block, ist vorteilhaft zur Kennung des Überrahmens bei diesem Verfahren. Durch die spezielle Anordnung dieser Rahmenkennung wird eine Vortäuschung durch die Dienstbits im zweiten Block vermieden, so dass die Dienstbits ohne Einschränkung benutzt werden können.

Vorteilhafte Ausgestaltungen und Weiterbildungen des Erfindungsgegenstandes sind in den Unteransprüchen angegeben.

Nachstehend wird die Erfindung anhand eines mit Zahlen versehenen Ausführungsbeispiels näher erläutert.

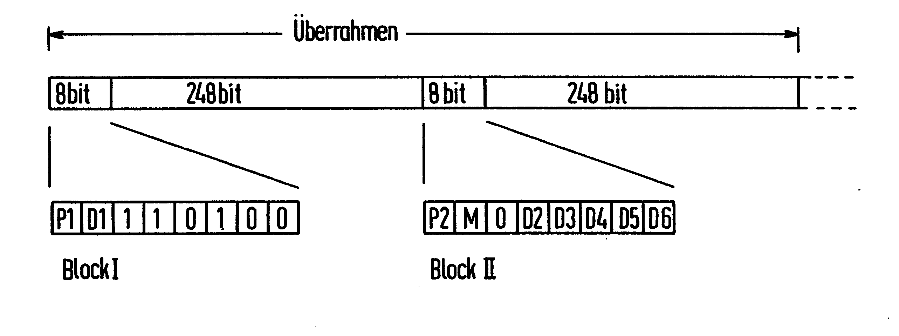

Das in der Figur dargestellte Ausführungsbeispiel zeigt die Anordnung der Zusatzbits in einem Überrahmen. Dieser hat die Länge $2^9$ bit = 512 bit. Er enthält zwei Blöcke mit je k = 8 Zusatzbits. Zwischen den Blöcken sind jeweils 248 Informationsbits angeordnet.

Block I, das ist der für die Zusatzsignale vorgesehene Block des ersten Halbrahmens, enthält ein Paritätsbit P1, ein Dienstbit D1 und sechs Rahmenkennungsbits, die das Rahmenkennungswort 110100 bilden. Block II, also der für die Einfügung von Zusatzbits vorgesehene Block des zweiten Halbrahmens des Überrahmens, enthält ein Paritätsbit P2, ein Markierungsbit M, ein Rahmenkennungsbit mit dem logischen Wert 0 und fünf Dienstbits mit den Werten D2 bis D6. Das Rahmenkennungsbit im Block II befindet sich in der Position 3. Es hat den entgegengesetzten logischen Wert wie das entsprechende Rahmenkennungsbit in der Position 3 in Block I. Die Dienstbits D1 bis D6 können beliebige Werte annehmen, ohne dass die Rahmenkennung vorgetäuscht werden kann.

Aus acht aufeinanderfolgenden Überrahmen wird ein Mehrfachrahmen gebildet. Im Überrahmen Nr. 1, also dem in der Figur dargestellten Überrahmen, hat das Markierungsbit den logischen Wert 1. In den weiteren, in der Figur nicht dargestellten Überrahmen Nr. 2 bis 8 hat es den logischen Wert 0. Ein rückgekoppeltes Schieberegister, das entsprechend der eingangsseitigen Erläuterung als Generator für die Scramblerfolge verwendet wird, wird zu Beginn jedes Mehrfachrahmens zurückgesetzt. Dadurch entsteht eine Scramblerfolge der Periode $2^{12}$ = 4096.

Die zweckmässige, zeitmultiplexe Ausnutzung der Dienstbits hängt von der Bitrate des Digitalsignals ab. Handelt es sich um ein Digitalsignal

3 0 107 175 4

der vierten Hierarchiestufe mit einer Bitrate $r_b =$ 139 264 kbit/s, so ergibt sich die Überrahmenfrequenz $f_{\ddot{u}} = r_b \cdot \frac{512}{496} \cdot \frac{1}{512}$ zu 280,77 kHz. In jedem Dienstbit kann somit ein Digitalsignal mit der Bitrate 280,77 kbit/s übertragen werden. Ein sinnvoller Wert für die Bitrate der digitalen Dienstkanäle ist jedoch ca. 30 kbit/s. Mit dieser Bitrate lässt sich ein Dienstgespräch mit Deltamodulation übertragen. Es ist also zweckmässig, die Dienstbits zeitmultiplex auszunutzen und acht digitale Dienstsignale mit der Bitrate von 35,10 kbit/s pro Dienstbit zu übertragen.

## Patentansprüche

1. Verfahren zur digitalen Nachrichtenübertragung in einem Digital-Richtfunksystem mit einem Überrahmen für die Digitalsignale zum Übertragen zusätzlicher Informationen, wobei der Überrahmen zwei Blöcke enthält mit jeweils einer bestimmten Anzahl von Zusatzbits und Informationsbits und in ihm eine Verwürfelung der Digitalsignale durch Addition eines periodischen Bitmusters zum Digitalsignal erfolgt, dadurch gekennzeichnet, dass der Block des ersten Halbrahmens Paritätsbits, Dienstbits und Rahmenkennungsbits und der Block des zweiten Halbrahmens Paritätsbits, Dienstbits sowie ein Markierungsbit und ein Rahmenkennungsbit enthalten, und dass m Überrahmen zu einem Mehrfachrahmen zusammengefasst sind und das zum Verwürfeln verwendete Muster eine Periode von der Länge des Mehrfachrahmens hat.

2. Verfahren nach Anspruch 1, dadurch gekennzeichnet, dass das Rahmenkennungsbit im zweiten Block genau um eine halbe Länge des Überrahmens gegenüber einem der Rahmenkennungsbits im ersten Block verschoben ist und den entgegengesetzten logischen Wert wie dieses hat.

3. Verfahren nach Anspruch 1 oder 2, dadurch gekennzeichnet, dass das Markierungsbit in aufeinanderfolgenden Überrahmen des Mehrfachrahmens die Werte eines periodischen Musters der Periode m durchläuft.

4. Verfahren nach Anspruch 3, dadurch gekennzeichnet, dass das Markierungsbit im ersten Überrahmen eines Mehrfachrahmens den logischen Wert 1 und in dem anderen Überrahmen den logischen Wert 0 aufweist.

5. Verfahren nach einem der vorhergehenden Ansprüche, dadurch gekennzeichnet, dass der Mehrfachrahmen zur Übertragung von bis zu maximal m Dienstsignalen im Zeitmultiplex in einem Dienstbit ausgenutzt wird.

## Claims

1. A method of digital communications transmission in a digital radio relay system comprising a super-frame for the digital signals for the transmission of additional items of information, where the super-frame comprises two blocks each containing a specific number of additional bits and information bits and in the super-frame the digital signals are scrambled by adding a periodic bit pattern to the digital signal, characterised in that the block of the first half-frame contains parity bits, service bits and frame code bits and the block of the second half-frame contains parity bits, service bits, one marker bit and one frame code bit, and that m super-frames are combined to form a multiple frame and that the pattern used for scrambling has a period which equals the length of the multiple frame.

2. A method as claimed in claim 1, characterised in that the frame code bit in the second block is displaced by precisely half the length of the super-frame in relation to one of the frame code bits in the first block and has the opposite logic value to this bit.

3. A method as claimed in claims 1 or 2, characterised in that the marker bit in consecutive super-frames of the multiple frame passes through the values of a periodic pattern of the period m.

4. A method as claimed in claim 3, characterised in that the marker bit has the logic value 1 in the first super-frame of a multiple frame and the logic value 0 in the other super-frame.

5. A method as claimed in one of the preceding claims, characterised in that the multiple frame is used to transmit up to a maximum of m service signals in t.d.m. in a service bit.

## Revendications

1. Procédé pour la transmission numérique d'information dans un système numérique de liaisons par voie hertzienne, avec un cadre à débordement pour les signaux numériques pour la transmission d'informations supplémentaires, du genre dans lequel le cadre à débordement comporte deux blocs ayant chacun un certain nombre de bits supplémentaires et de bits d'informations et dans lequel a lieu une cryptophonie des signaux numériques par addition, au signal numérique, d'un modèle de bits périodique, caractérisé par le fait que le bloc du premier demi-cadre contient des bits de parité, des bits de service, des bits d'identification de cadre, le bloc du second demicadre contenant des bits de parité, des bits de service ainsi qu'un bit de marquage et un bit d'identification de cadre, et que m cadres à débordement sont rassemblés en un cadre multiple, alors que le modèle utilisé pour la cryptophonie a une période de la longueur du cadre multiple.

2. Procédé selon la revendication 1, caractérisé par le fait que le bit d'identification de cadre dans le second bloc est décalé exactement d'une demi-longueur du cadre à débordement par rapport à l'un des bits d'identification de cadre et en possède la valeur logique inverse.

3. Procédé selon la revendication 1 ou 2, caractérisé par le fait que le bit de marquage passe par des cadres à débordement successifs du cadre multiple avec les valeurs d'un modèle périodique de période m.

3

4. Procédé selon la revendication 3, caractérisé par le fait que le bit de marquage possède dans le premier cadre à débordement d'un cadre multiple la valeur logique 1, et dans les autres cadres à débordement, la valeur logique 0.

5. Procédé selon l'une des revendications précédentes, caractérisé par le fait que le cadre multiple est utilisé pour la transmission au plus m signaux de service en multiplexage temporel en un bit de service.

248 bit

8 bit

Überrahmen

248 bit

8 bit

Block I

P1 | D1 | 1 | 1 | 0 | 1 | 0 | 0

Block II

P2 | M | 0 | D2 | D3 | D4 | D5 | D6